# EUROPEAN PATENT APPLICATION

(11) **EP 4 596 380 A1**
(43) Date of publication of application: **06.08.2025**
(21) Application number: 25151700.9
(22) Date of filing: 14.01.2025
(51) Int. Cl.: B62J 17/10, B62K 25/28

(54) **SWINGARM AND RELATED MOTORCYCLE**

(30) Priority: 30.01.2024 IT 202400001782
(71) Applicant: Piaggio & C. S.P.A., 56025 Pontedera Pisa (IT)
(72) Inventor: DE LUCA, Marco, 56025 Pontedera (PI) (IT); BAGATTINO, Luca, 56025 Pontedera (PI) (IT)
(74) Representative: Carangelo, Pierluigi

(57) **Abstract**

A swingarm (23) for a motorcycle (1) provided with wings (3) at least partially projecting rearward from a swingarm body (27) with respect to a rear wheel axle (10).

A motorcycle (1) comprising said swingarm (23).

## Description

### TECHNOLOGICAL FIELD

The present invention relates to the field of rideable-saddle vehicles. It specifically relates to a swingarm for a motorcycle.

### BACKGROUND ART

The prior art comprises various known solutions for optimizing the aerodynamics of a motorcycle. Some documents are directed to optimizing the aerodynamics of a motorcycle, such as the solution described in WO2023228143A1, for example. This document describes a solution which, in addition to optimizing the aerodynamics of the tail of a motorcycle, provides a spoiler adapted to generate a downforce when the motorcycle travels at high speeds.

Another known solution is described in WO2022162572A1. This document describes a motorcycle provided with a swingarm and a fairing adapted to be fluidly continuous so as to optimize the passage of air from the bottom of the vehicle through the space defined between the internal surface of the swingarm and the rear wheel.

The known solutions do not optimize the aerodynamic properties at the sides of the rear wheel. Turbulence can occur in this zone and it is important to make the airflow more homogeneous at the sides of the rear wheel, redirecting it behind the rear wheel, to optimize the overall aerodynamic properties of the motorcycle.

### SUMMARY

The aforesaid drawbacks of the prior art are now solved by a first object of the present invention concerning a swingarm for a motorcycle provided with wings at least partially projecting rearward from a swingarm body with respect to a rear wheel axle. The wings protrude rearward with respect to the body of the swingarm. The wings thus redirect the air from the fairing toward the back of the motorcycle. Each wing is joined to the swingarm body at a root portion of the wing. Since each wing is stably fastened to the swingarm body, the wings are more reliable and secure. The wing is joined to the swingarm body in a direct manner.

The wings can comprise a leading edge and a trailing edge, the leading edge being arranged in front of the rear wheel axle and the trailing edge being arranged behind the rear wheel axle. The air flow from the front fairing is thus intercepted in an intermediate zone of the swingarm and redirected rearward, beyond the rear end of the swingarm body.

The trailing edge of the wing can be closer to the centerline plane of the swingarm body than the leading edge of the same wing. The air is thus progressively deflected from the wing toward the centerline plane of the vehicle so as to close the aerodynamic wake toward the center.

The wings can extend upward from the swingarm body. The wings extend from the swingarm body upward to cover at least partially the upper half of the rear wheel and avoid turbulence in the zone at the sides of the rear wheel rim.

The wings can be arranged on the swingarm body above the rear wheel axle. The wings extend from the upper part of the swingarm body to make the solution more compact and therefore more aerodynamic.

Each wing can be connected to the swingarm body at a root portion. The wings are attached to the swingarm body by gluing, co-lamination or mechanically. The zone of the wing root is the zone in which it is attached to the swingarm body. The wings can be integral with the swingarm body, and since they do not move with respect thereto, are more stable and accidental detachments are avoided.

The wings can comprise an upper edge and a lower edge. The upper edge and the lower edge can be arranged above the rear wheel axle. The wing preferably extends to cover the upper half of the sides of the rear wheel.

The external surface of the wings is outwardly convex. The convex surface allows the wing to deflect the air flow toward the centerline plane of the motorcycle.

The external surface of the wing can be inclined so that the upper edge thereof is more external than the lower edge thereof. This inclination of the wings allows providing the swingarm with a downforce load when the motorcycle is under maximum tilt conditions when cornering.

A second object of the present invention is a motorcycle comprising the above swingarm. The motorcycle thus conceived optimizes the aerodynamic properties thereof both on straights and when cornering.

In particular, the trailing edge of each wing of the swingarm can lie at the height of the rear rim of the rear wheel, when the motorcycle is observed from the side. The air flow from the front fairing is thus deflected toward the back of the motorcycle.

The wing can be shaped to cover a part of the upper half of the rear rim of the rear wheel. The zone in which the greatest turbulence is created in the rear axle of the motorcycle is the one that lies behind the transverse widening of the front fairing, i.e., in the zone of the upper half of the rear wheel.

These and other advantages will be more apparent from the description provided hereinbelow of an embodiment given by way of non-limiting indication with reference to the accompanying drawings.

### DESCRIPTION OF THE DRAWINGS

In the drawings:
Fig. 1 shows a diagrammatic side view of the motorcycle of the present invention;
Fig. 2 shows an axonometric view of the rear axle of the motorcycle of the present invention;
Fig. 3 shows a diagrammatic axonometric view of the swingarm of the present invention;
Fig. 4 shows a diagrammatic side view of the swingarm of the present invention;
Fig. 5 shows a diagrammatic rear view of the swingarm of the present invention;
Fig. 6 shows a diagrammatic front view of the swingarm the object of the present invention;
Fig. 7 shows a diagrammatic top view of the swingarm of the present invention;
Fig. 8 shows a diagrammatic bottom view of the swingarm of the present invention;
Fig. 9 shows a side view of the motorcycle of the present invention;
Fig. 10 shows a further axonometric view of the rear axle of the motorcycle of the present invention;
Fig. 11 shows a rear view of the motorcycle of the present invention, when in vertical position;
Fig. 12 shows a rear view of the motorcycle of the present invention, when in tilt position;
Fig. 13 shows a bottom view of the rear axle of the motorcycle of the present invention.

### DETAILED DESCRIPTION

The following description of one or more embodiments of the invention relates to the accompanying drawings. The same reference numerals in the drawings identify equal or similar elements. The subject of the invention is defined by the appended claims. The technical details, structures, or features of the solutions described below can be mutually combined in any manner.

The figures show the axles to indicate the directions up-down (U-D), right-left (R-L) and front-back (F-B).

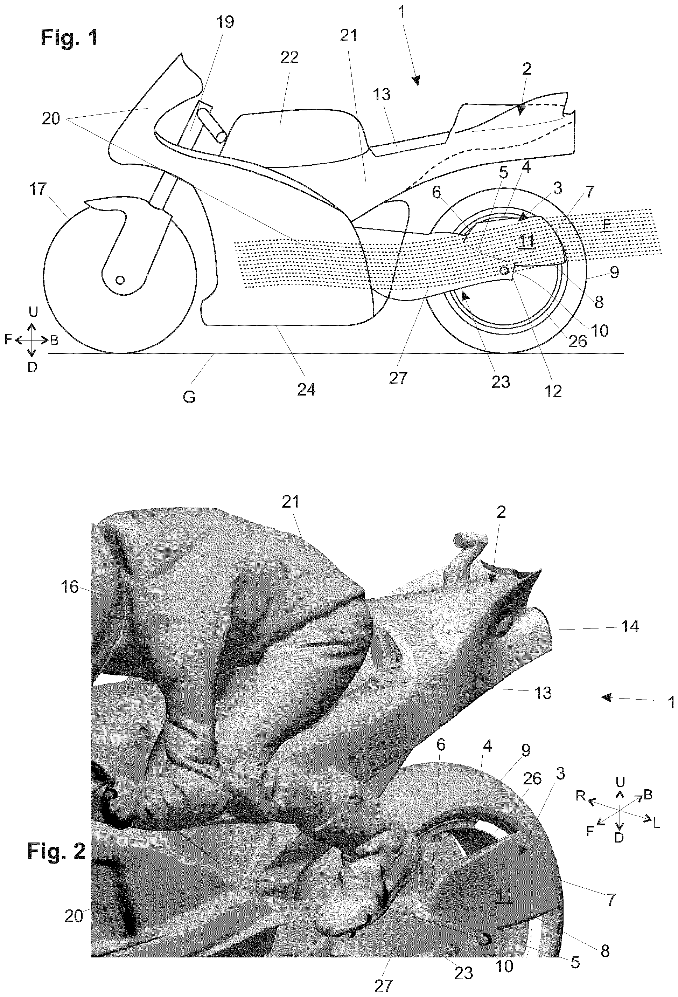

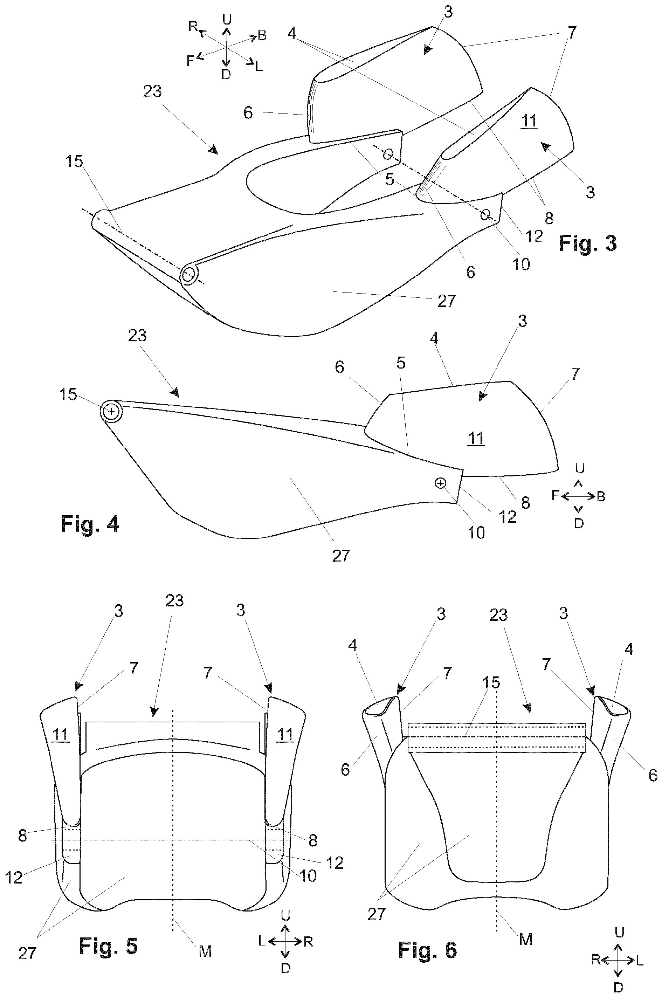

In Figs. 1-2, 9-13, reference numeral 1 indicates a motorcycle provided with a swingarm 23 provided with wings 3, better depicted in Figs. 3-8.

The motorcycle 1 is of the road type and is conceived to travel at high speeds. Preferably, the motorcycle 1 is a racing motorcycle intended for MotoGP^{™}. The motorcycle 1 comprises the classic elements of a road motorcycle, i.e., a front wheel 17, a rear wheel 9, a tank 22, and a front fairing 20 and a tail fairing 21 adapted to cover at least partially cover the frame and the engine of the motorcycle. The motorcycle 1 is also provided with a saddle 13 on which the driver 16 can be seated. The front wheel 17 is steering and controlled by a steering assembly 19.

The swingarm 23 comprises a swingarm body 27 and two wings 3.

The swingarm body 27 is hinged to the frame of motorcycle 1 and pitches about a pitch axis 15.

The swingarm body 27 comprises a portion adapted to receive, either directly or indirectly, the rear wheel axle 10. The rear wheel axle 10, schematized in the figures with a dashed-dotted line, is connected in a known manner to the swingarm body 27.

The wings 3 extend upward and rearward from the swingarm body 27.

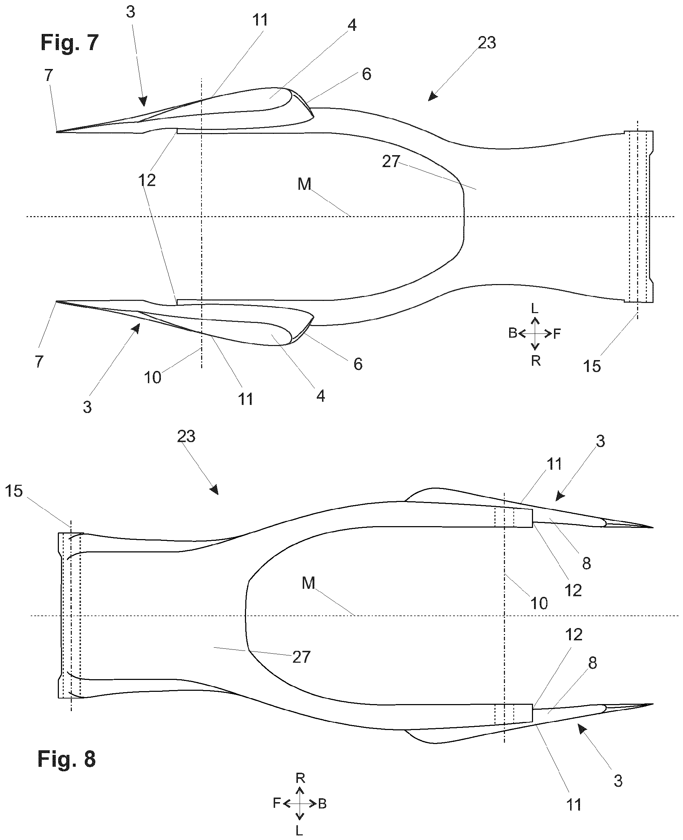

The swingarm body 27 has the typical tuning fork shape when observed from the top or bottom, as shown in Figs 7-8. The right wing 3 is fastened on the right arm of the swingarm body 27, while the left wing 3 is fastened on the left arm of the swingarm body 27.

The wings 3 are joined to the swingarm body 27 at a root 5 of wing 3.

Each wing 3 has a wing profile section, as better shown in Fig. 7, and comprises a leading edge 6 and a trailing edge 7, typical in any wing profile.

Wing 3 extend upward from the swingarm body 27 like the tail fin of an airplane.

The wings 3 are arranged on the swingarm body 27 so as to be completely above the rear wheel axle 10. Therefore, both the upper edge 4 and the lower edge 8 of the wings 3 are positioned above the rear wheel axle 10, as better shown in Figs. 5, 11, 12.

The lower edge 8 of wing 3 intersects the swingarm body 27, as better shown in Figs. 3-4, 9. Since the upper edge 4 of wing 3 is positioned higher than the swingarm body 27, it is free and has the classic wing profile shape, as better shown in Fig. 7.

Wing 3 extends rearward from the swingarm body 27 beyond the rear end 12 thereof and beyond the rear wheel axle 10.

The leading edge 6 of wing 3 intercepts the swingarm body 27, as better shown in Figs. 3-4, 9. Since the trailing edge 7 of wing 3 is instead more retracted than the swingarm body 27, it is free. The trailing edge 7 is an acute edge and can be slightly curved. The leading edge 6 is tapered and is thicker than the trailing edge 7, as better shown in Figs. 3, 6, 7.

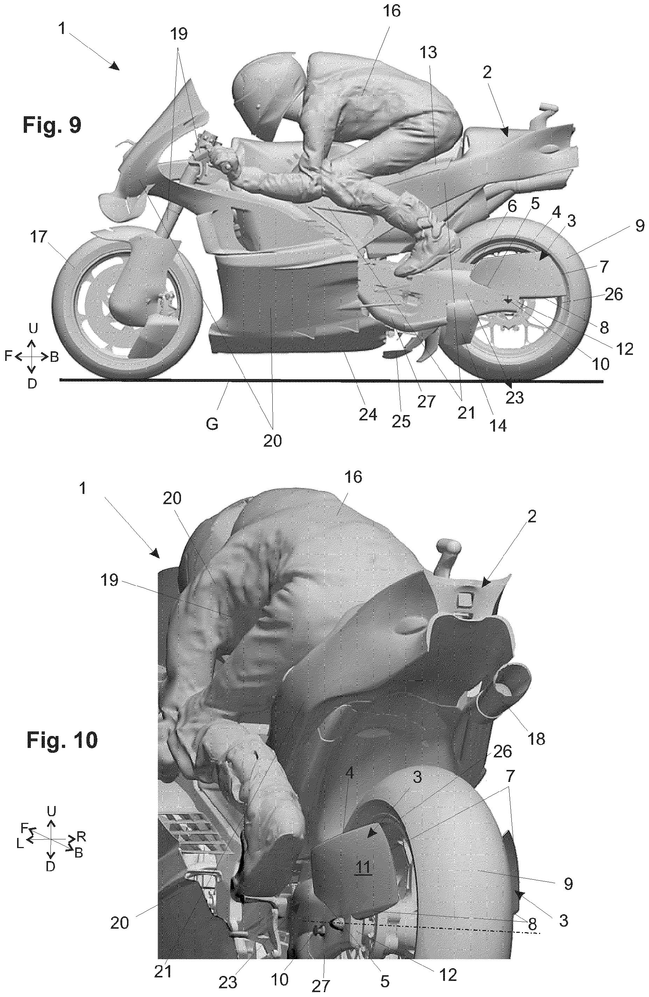

The trailing edge of wing 3 is shaped and positioned so as to at least partially overlap, with the rear rim 26 of the rear wheel 9 or with the rear wheel 9 itself, when the motorcycle 1 is observed from the side as in Figs. 1,9. The upper half of the rear rim 26 is thus almost entirely covered by the wing 3 when the motorcycle 1 is observed from the side (see Figs. 1, 9).

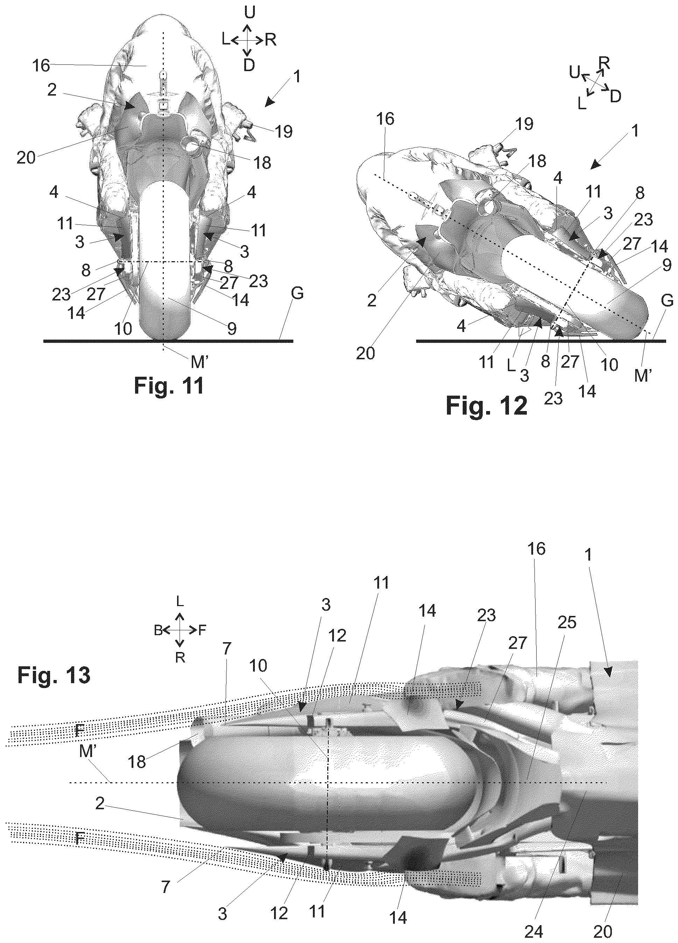

The trailing edge 7 of wing 3 has a distance from the centerline plane M of the swingarm body 27 which is smaller than the distance of the leading edge 6 from the centerline plane M, as better shown in Fig. 7. In practice, the wings 3 are shaped to close the flow lapping the external surfaces 11 thereof toward the centerline plane M' of motorcycle 1, as better shown in Fig. 13.

Wing 3 is curved and has an external surface 11 which is convex in the front-back direction, as it can seen in Figs. 5-8.

Wing 3 is also laterally inclined and the upper edge 4 is at least partially more external with respect to the lower edge 8 and with respect to the centerline plane M, as shown in Figs. 5-7. The dihedral angle of wing 3 can be between 0 and 50 degrees with respect to the centerline plane M' of motorcycle 1, allowing the operation of wing 3 to be adapted to the needs of motorcycle 1. When the motorcycle 1 is tilted, i.e., inclined on a side for cornering, the inclination of wing 3 allows providing a dual effect, as shown in Fig. 12. The air flowing over the back of wing 3, i.e., over the external surface 11 on the side to which the motorcycle is inclined, generates a thrust L which, with the vertical component thereof, increases the adherence of the rear wheel 9, and with the horizontal component thereof, opposes the centrifugal thrust acting on the motorcycle 1 when cornering.

The swingarm 23 can be also provided with side wings 14, as shown in Figs. 9, 11-13. These side wings 14 are connected to the sides of the swingarm body 27 and initially come out transversely to then curve downward and toward the centerline plane M, as better shown in Figs. 11, 12. This shape of the side wings 14 allows generating a downforce load, due to the ground effect, when the motorcycle 1 is leaning over for cornering, as shown in Fig. 12. It is indeed noticeable in Fig. 12 that when the motorcycle 1 is inclined to one side, one of the side wings 14 nears the ground G, and under conditions of increased tilt angle, it becomes partially parallel to the ground G, generating, due to the shape thereof in the front-back direction, a downforce effect, otherwise known as the ground effect.

The swing arm 23 can further comprise a deflector 25 which extends downward from the swingarm body 27 and projects frontally, as shown in Fig. 9. The deflector 25 is configured to intercept the air flow flowing under the front fairing 20 of motorcycle 1 and deflect it upward, in the zone between the tail fairing 21 and the rear wheel 9.

The tail 2 of motorcycle 1 is shaped so as to generate an air channel in the lower portion of the tail 2 facing the rear wheel 9. The air from below the front fairing 20 is thus redirected more efficiently behind the motorcycle 1, optimizing the overall aerodynamics thereof.

The wings 3 can be independent elements mechanically connected to the swingarm body 27 or elements monolithically connected to the swingarm body 27.

In conclusion, it is apparent that the invention thus devised is susceptible to several modifications or variations, all falling within the invention; moreover, all details are replaceable by technically equivalent elements. In practice, the amounts may be varied depending on technical needs.

### Key:

- 1: motorcycle
- 2: tail assembly
- 3: wing
- 4: upper edge (of the wing)
- 5: root (of the wing)
- 6: leading edge (of the wing)
- 7: trailing edge (of the wing)
- 8: lower edge (of the wing)
- 9: rear wheel
- 10: rear wheel axle
- 11: external surface (of the wing)
- 12: rear end (swingarm body)
- 13: saddle
- 14: side wing
- 15: pitch axis (swingarm)
- 16: driver
- 17: front wheel
- 18: exhaust pipe
- 19: steering assembly
- 20: front fairing
- 21: tail fairing
- 22: tank
- 23: swingarm
- 24: bottom (of the motorcycle)
- 25: deflector
- 26: rear rim (of the rear wheel)
- 27: swingarm body
- G: ground
- F: air flow
- M: centerline plane (of the swingarm)
- M': centerline plane (of the vehicle)
- L: thrust

## Claims

1. A swingarm (23) for a motorcycle (1) provided with wings (3) at least partially projecting rearward from a swingarm body (27) with respect to a rear wheel axle (10), wherein each wing (3) is jointed to the swingarm body (27) at a root portion (5) of the wing (3).

2. The swingarm (23) according to claim 1, wherein said wings (3) comprise a leading edge (6) and a trailing edge (7), the leading edge (6) being arranged in front of the rear wheel axle (10) and the trailing edge (7) being arranged behind the rear wheel axle (10).

3. The swingarm (23) according to claim 2, wherein the trailing edge (7) of the wing (3) is closer to the centerline plane (M) of the swingarm body (27) than the leading edge (6) of the same wing (3).

4. The swingarm (23) according to any one of the preceding claims, wherein said wings (3) extend upward from the swingarm body (27).

5. The swingarm (23) according to any one of the preceding claims, wherein the wings (3) are arranged on the swingarm body (27) above the rear wheel axle (10).

6. The swingarm (23) according to any one of the preceding claims, wherein each wing (3) is integral with the swingarm body (27).

7. The swingarm (23) according to any one of the preceding claims, wherein said wings (3) comprise an upper edge (4) and a lower edge (8), the upper edge (4) and the lower edge (8) being arranged above the rear wheel axle (10).

8. The swingarm (23) according to any one of the preceding claims, wherein an external surface (11) of the wings (3) is an outwardly convex surface.

9. The swingarm (23) according to claims 7 and 8, wherein the external surface (11) of the wing (3) is inclined so that the upper edge (4) is more external than the lower edge (8).

10. A motorcycle (1) comprising a swingarm (23) according to any one of the preceding claims.

11. The motorcycle (1) according to claim 10, wherein the trailing edge (7) of each wing (3) lies at the height of the rear rim (26) of the rear wheel (9), when observing the motorcycle (1) from the side.

12. The motorcycle (1) according to claim 10 or 11, wherein the wing (3) is shaped to cover a part of the upper half of the rear rim (26) of the rear wheel (9).
